# EUROPEAN PATENT SPECIFICATION

(11) **EP 3 907 068 B1**
(45) Date of publication and mention of the grant of the patent: **08.04.2026**
(21) Application number: 21172282.2
(22) Date of filing: 05.05.2021
(51) Int. Cl.: B29C 63/00, B32B 3/02, B32B 3/12, B32B 7/12, B32B 27/08, B32B 27/32, B32B 37/12, B32B 38/00, B32B 3/20, B32B 3/26, B32B 37/22

(54) **PRODUCTION METHOD OF A PANEL FOR FURNITURE BASED ON A POLYPROPYLENE ALVEOLAR CORE, TOP, BOTTOM AND EDGE FILMS**
HERSTELLUNGSVERFAHREN EINER MÖBELPLATTE AUF DER BASIS EINES ALVEOLAREN KERN-, OBER-, UNTEREN UND KANTENFOLIEN AUS POLYPROPYLEN UND PANEL FÜR MÖBEL UND EINRICHTUNGSZUBEHÖR, DIE DURCH EINE SOLCHE METHODE ERHALTEN WERDEN
PROCEDE DE FABRICATION D'UN PANNEAU POUR AMEUBLEMENT A BASE D'UN NOYAU ALVEOLAIRE, DE FILMS SUPÉRIEUR, INFÉRIEUR ET DE BORD EN POLYPROPYLENE ET PANNEAU POUR MEUBLES ET ACCESSOIRES D'AMEUBLEMENT OBTENUS PAR UNE TELLE METHODE

(30) Priority: 06.05.2020 IT 202000010108
(43) Date of publication of application: 10.11.2021
(73) Proprietor: ZAAC S.r.l., 33082 Azzano Decimo (PN) (IT)
(72) Inventor: CIGANA, Alessandro, 33082 Azzano Decimo (PN) (IT); ZANCHETTA, Alex, 33080 Fiume Veneto (PN) (IT)
(74) Representative: Frare, Paolo

(56) References cited:
- EP-A1- 2 147 778
- EP-A1- 3 159 154
- WO-A1-2015/058608
- CN-U- 209 079 361
- DE-A1- 10 010 547
- IT-A1- BO20 090 199
- IT-A1- MI20 000 439
- IT-A1- PN20 150 013

## Description

The present invention relates to a production method of a panel for furniture and furnishing accessories, and to a panel obtained by such a method.

Today, for the production of furniture and furnishing accessories such as cabinets, beds, shelves, tables, chairs, etcetera, as an alternative to solid wood panels, panels made of a material derived from wood are often used, such as so-called "chipboard" (or "particleboard" i.e., wood fibre panels made of wood shavings resulting from the waste of normal wood processing, mixed with binding materials), or so-called "MDF" panels (acronym of "Medium-density fibreboard", which are wood fibre panels generally held together by adhesives, resins and waxes).

In order to improve the appearance thereof, these panels can be covered with films or foils of various materials, such as wood, metal, paper, etc.

In particular, it is known to cover the edges of such panels, both to protect them for example from infiltration of liquids or moisture, and to obtain a fine aesthetic effect, with polypropylene films, with various decorations and finishes, fixed to the panels by gluing, usually with a polyurethane adhesive.

EP3159154A1 discloses a resin sandwich panel which has two resin skin material sheets having peripheral edge portions joined to each other so as to form an internal hollow portion. A resin core material is disposed in the hollow portion. At least one of surfaces of the resin core material opposing the two resin skin material sheets has a groove portion extending across the entire surface, and a depression communicating with the groove portion. At least one of the two resin skin material sheets additionally has an atmosphere-opened through-hole provided in a thickness direction thereof. When the one of the surfaces of the resin core material and the corresponding resin skin material sheet are surface-to-surface adhered to each other in the hollow portion, air between the surfaces and the skin material sheet is guided to the depression via the groove portion, and exhausted out of the atmosphere-opened through-hole.

ITBO20090199A1 discloses a top for household appliances and furniture having a panel and a perimetral frame. The panel consist in an alveolate board having an alveolate or foam core, that can be made of polypropylene, sandwiched between two external plates or sheets, that can be also made of polypropylene.

ITPN20150013A1 discloses a method for the production of honeycomb panels comprising the steps of arranging a honeycomb layer constituting the internal body of the panel, bonding two coating layers on the surfaces of the honeycomb layer and edging the sides of the panel using shaped side profiles.

However, such known panels have certain drawbacks.

In fact, such well-known panels are difficult to dispose of and recycle because, since the various materials composing them generally require different disposal and/or recycling processes, in order to dispose of or recycle such panels it is first necessary to separate the various materials composing them, which can be very complicated and expensive, or even, in some cases, impossible.

Furthermore, if MDF panels are used, they are difficult to recycle, in particular due to the presence of glues, resins and waxes therein.

Moreover, such known types of panels are relatively heavy (e.g., the specific weight of chipboard panels can be in the range of 400-650 kg/m³, while that of MDF panels can be in the range of 680-700 kg/m³), and therefore difficult to transport and handle; furthermore, the relatively high specific weight of such panels imposes dimensional and geometrical constraints (e.g., minimum dimensions to support the weight thereof, use of sufficiently strong hinges, etc.) on furniture and furnishing accessories made with such known types of panels.

Furthermore, such known types of panels have the further disadvantage that wood-derived materials can generally deteriorate when wet or subjected to moisture, which limits the potential use thereof in wet or humid environments, such as bathrooms, swimming pools, saunas, spas, etc.

The main object of the present invention is to overcome the above-mentioned drawbacks, and in particular to obtain a production method of a panel for furniture and furnishing accessories, and a panel for furniture and furnishing accessories obtained by such a method, which can be recycled easily, quickly, and with relatively low costs.

In the context of such object, another object of the invention is to obtain a production method of a panel for furniture and furnishing accessories, and a panel for furniture and furnishing accessories obtained by such a method, which reduces the dimensional and geometric constraints to be respected in the production of furniture and furnishing accessories using said panel.

Another object is to obtain a method for the production of a panel for furniture and furnishing accessories, and a panel for furniture and furnishing accessories obtained by such a method, which can be used without any particular problems even in wet and humid environments such as bathrooms, swimming pools, saunas, wellness centres, etc.

These and other objects according to the present invention are achieved by a production method of a panel for furniture and furnishing accessories comprising the following steps:
- preparing an alveolar plate made of polypropylene or of a material containing at least 60% by weight of polypropylene, comprising a first major face and a second major face, that are solids, substantially parallel to each other and joined up by a lateral wall;
- applying, respectively on the first major face and on the second major face, by gluing or thermo-welding, respectively a first finishing film and a second finishing film, made of polypropylene or of a material containing at least 60% by weight of polypropylene;
- applying on the lateral wall, by gluing or thermo-welding, a foil made of polypropylene or of a material containing at least 60% by weight of polypropylene.

Preferably, the alveolar plate is made of a material containing at least 70% by weight, more preferably at least 80% by weight, of polypropylene.

Preferably, the first finishing film and the second finishing film are made of a material containing at least 70% by weight, more preferably at least 80% by weight, of polypropylene.

Advantageously, the first finishing film and the second finishing film can be made of the same material, or of different materials from each other.

Preferably, the foil is made of a material containing at least 70% by weight, more preferably at least 80% by weight, of polypropylene.

Preferably, the foil is attached to the lateral wall by a layer of polyolefin adhesive applied in a liquid state, and previously heated to a melting temperature comprised between 180°C and 200°C.

More preferably, such a melting temperature is 190°C. Preferably, the thickness of the first and/or the second finishing film is between 0.1 and 0.3 mm, more preferably it is 0.12 mm.

In a preferred embodiment, the polyolefin adhesive is applied at a temperature thereof between 180°C and 200°C. More preferably, the polyolefin adhesive is applied at a temperature thereof of 190°C.

In an advantageous embodiment, the liquid state polyolefin adhesive layer is applied by means of a coating roller heated to a coating temperature of 180°C to 200°C.

More preferably, such a coating temperature is 190°C. Advantageously, the coating roller is configured to rotate about a first axis of rotation, and the alveolar plate is positioned, during application to the lateral wall thereof of the polyolefin adhesive layer, with the first major face and the second major face arranged perpendicularly to the first axis of rotation, and is moved such that the lateral wall thereof moves in a direction tangent to the lateral surface of the coating roller.

Advantageously, the lateral wall of the alveolar plate moves in a direction tangent to the lateral surface of the coating roller with a feed rate preferably between 10-18 metres per minute.

More preferably, the feed rate is 13.6 metres per minute. Preferably, the alveolar plate has a plurality of alveoli whose total volume is at least 40% of the volume bounded by an envelope surface of the alveolar plate.

More preferably, the alveolar plate has a plurality of alveoli whose total volume is at least 80% of the volume bounded by an envelope surface of the alveolar plate.

In a preferred embodiment, the method comprises, after the step of applying, respectively on the first major face and the second major face, by gluing or thermo-welding, respectively a first finishing film and a second finishing film made of polypropylene or a material containing at least 60% by weight of polypropylene, a step of pressing the first finishing film and second finishing film towards the alveolar plate.

More preferably, the step of pressing the first finishing film and the second finishing film towards the alveolar plate is carried out using a calender.

Advantageously, the method comprises, after the step of applying to the lateral wall, by gluing or thermo-welding, a foil made of polypropylene or a material containing at least 60% by weight of polypropylene, a step of pressing the foil towards the lateral wall. Preferably, said step of pressing the foil towards the lateral wall is obtained by means of one or more pressing rollers rotating about a second axis of rotation perpendicular to the first major face and second major face.

In a preferred embodiment, the first major face and the second major face have a surface tension equal to or greater than 38 dyne/cm, more preferably equal to or greater than 42 dyne/cm. In this case, the first finishing film and the second finishing film are applied to the first major face and the second major face, respectively, using a polyurethane adhesive.

In a preferred embodiment, the alveolar plate is made of polypropylene filled with a mineral filler.

Preferably, the alveolar plate is made of polypropylene filled with at least 15% of said mineral filler.

Still preferably, the mineral filler is, or comprises, calcium carbonate and/or talc.

Advantageously, the method comprises, subsequent to the step of applying to the lateral wall, by gluing or thermo-welding, a foil made of polypropylene or a material containing at least 60% by weight of polypropylene, a step of finishing the panel which comprises removing possible portions of the foil protruding from the lateral wall.

Preferably, said finishing step is carried out by means of one or more blades and/or cutters arranged to remove possible portions of the foil protruding in front and/or behind and/or above or below with respect to the lateral wall.

The aforementioned task and objects are also solved by a panel for furniture and furnishing accessories comprising:
- an alveolar plate made of polypropylene or of a material containing at least 60% by weight of polypropylene, comprising a first major face and a second major face, that are solid, parallel to each other and joined up by a lateral wall;
- a first finishing film and a second finishing film, made of polypropylene or of a material containing at least 60% by weight of polypropylene, applied respectively to the first major face and to the second major face by gluing or thermo-welding;
- a foil made of polypropylene or of a material containing at least 60% by weight of polypropylene, fixed to the lateral wall by thermo-welding or gluing.

Preferably, the alveolar plate is made of a material containing at least 70% by weight, more preferably at least 80% by weight, of polypropylene.

Preferably, the first finishing film and the second finishing film are made of a material containing at least 70% by weight, more preferably at least 80% by weight, of polypropylene.

Advantageously, the first and the second finishing film are made of the same material, or of different materials from each other.

Preferably, the foil is made of a material containing at least 70% by weight, more preferably at least 80% by weight, of polypropylene.

The features and advantages of the present invention will be more apparent from the following description, which is to be understood as exemplifying and not limiting, with reference to the appended schematic drawings, wherein:
- figures 1 and 2 illustrate, in a schematic side view, two steps of a method according to the invention;
- figures 3 to 7 illustrate, in a schematic perspective view, a panel according to the invention at various steps of the processing thereof;
- figure 8 illustrates, in a schematic perspective view, part of an alveolar plate used in the method according to the invention;
- figure 9 illustrates, a schematic perspective view, an edgebanding machine for the application of some steps of the method according to the invention;
- figure 10 shows, in a schematic plan view, the edgebanding machine of figure 9.

The method according to the invention for producing a panel 1 for furniture and furnishing accessories, not shown, comprises arranging an alveolar plate 2 made of polypropylene or of material containing at least 60% by weight (preferably at least 70% by weight, more preferably at least 80% by weight) of polypropylene, such as polypropylene filled with a mineral filler (such as calcium carbonate and/or talc) preferably present in an amount greater than 15% by weight of the alveolar plate 2, more preferably between 15 and 40% by weight of the alveolar plate 2.

The alveolar plate 2 comprises a plurality of alveoli 3, the total volume of which is preferably at least 40%, preferably at least 80%, of the volume bounded by an envelope surface 4 of the alveolar plate 2.

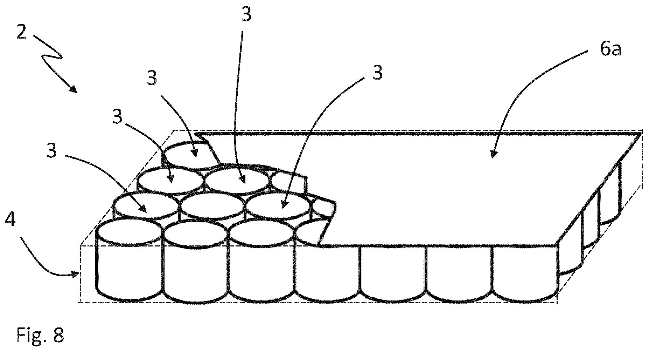

In the present patent, the envelope surface 4 of the alveolar plate 2 is to be understood as the surface of an ideal solid which externally delimits the alveolar plate 2; for example, in the case where the alveolar plate 2 is a flat rectangular-based plate, the envelope surface 4 is a parallelepiped with a rectangular base which surrounds and encloses said flat plate 2, defining the external dimensions thereof. An example of an envelope surface 4 is schematically depicted in figure 8 by a dashed line.

The alveoli 3 can be open, i.e., communicating with the outside of the alveolar plate 2, at one or more points, or can be completely encompassed within the body of the alveolar plate 2, i.e., not in communication with the outside thereof.

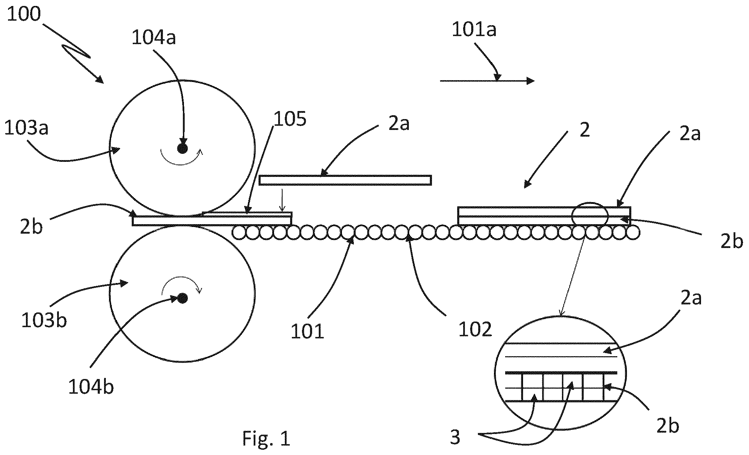

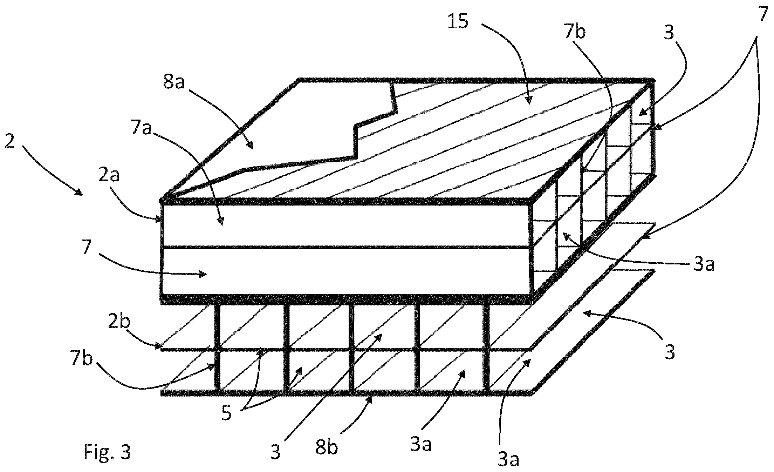

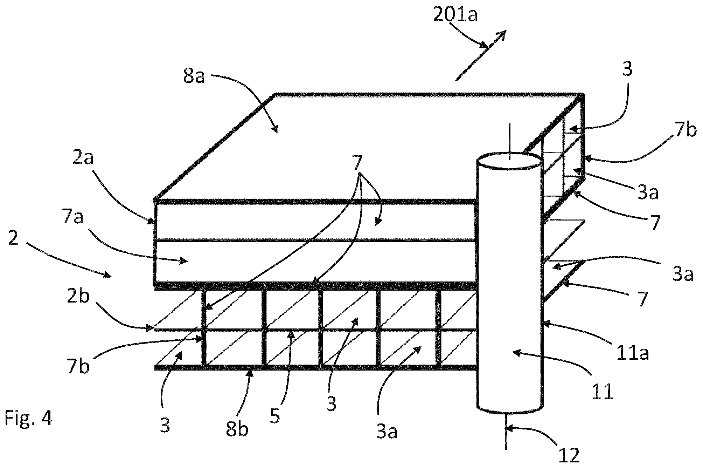

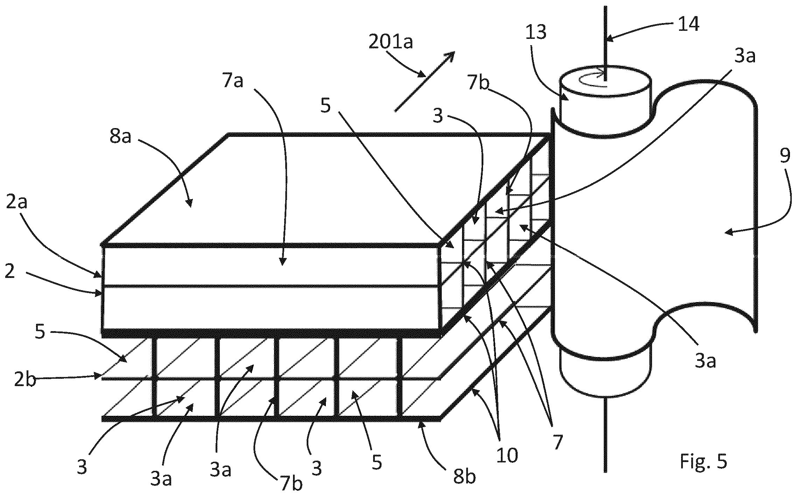

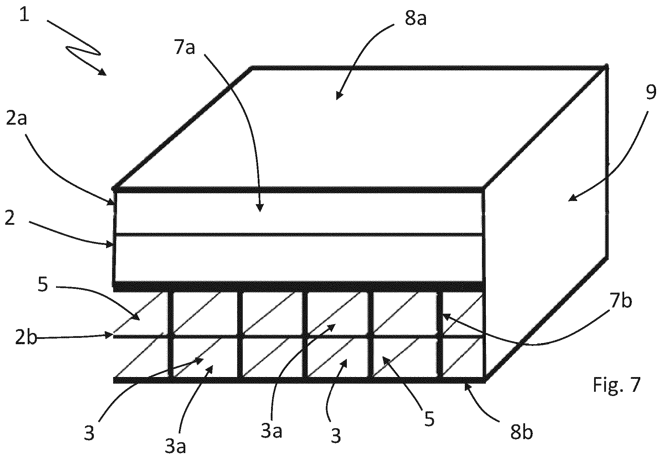

In a preferred embodiment, such as in the examples of figures 1-7, 9 and 10, the alveoli 3 can advantageously comprise a plurality of straight channels 3a parallel to each other, separated by partitions 5 constituting the solid part of the alveolar plate 2. In this case, the alveolar plate has a so-called "corrugated" structure. In a preferred embodiment, such as those illustrated, for example, in figures 1-7, 9 and 10, the alveolar plate 2 can comprise a plurality of overlapping modules, for example, as in figures 1-7, 9 and 10, two modules 2a, 2b, overlapping one another and fixed to each other, for example, by gluing.

Advantageously, as illustrated for example in figure 1, the two modules 2a and 2b can be glued together, for example in a so-called "collar" machine, indicated overall by the number 100, preferably comprising first conveying means 101, preferably comprising a plurality of conveyor rollers 102, or a conveyor belt, not illustrated; the first conveying means 101 are advantageously configured to allow the feeding of the modules 2a and 2b or an alveolar plate 2 in a first feed direction, indicated by the number 101a.

The collar machine 100 advantageously comprises two coating cylinders, 103a, 103b, configured to rotate about two axes of rotation 104a, 104b, respectively, advantageously perpendicular to the first feed direction 101a, and to spread an adhesive on the top and/or bottom surface of an alveolar plate 2 or a module 2a, 2b transiting by action of the first conveying means 101. With reference for example to figure 1, a module 2b can be advantageously made to transit between the two coating cylinders 103a and 103b, which apply a layer of adhesive 105, for example polyurethane, to the upper surface of said module 2b (which advantageously has a surface tension greater than or equal to 38 dyne/cm -preferably greater than or equal to 42 dyne/cm- so as to allow the polyurethane adhesive to set), then the second module 2a is positioned and pressed over the layer of adhesive 105 so as to adhere with the lower surface thereof (which advantageously also has a surface tension greater than or equal to 38 dyne/cm -preferably greater than or equal to 42 dyne/cm- so as to allow the polyurethane adhesive to set) thereto.

If said modules 2a and 2b have a corrugated structure, the same can be arranged so that the straight channels 3a of the two modules are parallel to each other, or, as in the advantageous examples of figures 1-7 9, 10, perpendicular to each other.

In a further advantageous embodiment, not shown, the two modules 2a and 2b overlapping each other can be part of the same alveolar plate suitably milled and folded in half thereon.

In a further advantageous embodiment, the alveoli 3 can assume a different conformation, for example, as in the advantageous embodiment of figure 8, a cylindrical shape, or a prism shape with a hexagonal base, etc.

Advantageously, in the case of an alveolar plate 2 with a corrugated structure, it is preferable, but not necessary, that the same has the following features:
- alveolar plate comprising three of overlapping modules, and a "thickness to weight ratio", defined as the ratio between the thickness thereof in mm and the weight thereof in grams per square metre, equal to 8/2400 (i.e., 8 mm over 2400 grams per square metre);
- alveolar plate comprising three overlapping modules, and a "thickness to weight ratio" of 10/3000 (i.e., 10 mm over 3000 grams per square metre);
- alveolar plate comprising two overlapping modules, and a "thickness to weight ratio" of 5/1200 (i.e., 5 mm over 1200 grams per square metre).

The alveolar plate 2 advantageously has a first major face 6a and a second major face 6a, which are solid (i.e., whose outer surface lacks alveoli) and substantially parallel to each other. In the case of a flat plate, "major face" means one of the two flat and parallel faces delimiting the plate, generally at the top and bottom, and having an area greater than the other faces or walls delimiting the plate in the other directions.

Such a first major face 6a and second major face 6a preferably have a surface tension equal to or greater than 38 dyne/cm (preferably equal to or greater than 42 dyne/cm).

Such a surface tension value can advantageously be obtained by subjecting said first major face 6a and second major face 6a to a so-called "corona treatment", a treatment known in the field of polymer surface treatments comprising applying a high-frequency electrical discharge to the surface to be treated.

The first major face 6a and the second major face 6a are connected to each other by a lateral wall 7, preferably, but not necessarily, perpendicular thereto.

Said lateral wall 7 can be completely or partially solid, i.e., lacking in the external surface thereof one or more alveoli 3, or can be completely or partially alveolate, i.e., having the openings of one or more alveoli 3 at the external surface thereof.

In the advantageous case illustrated in figures 1-7 and 9,10, the lateral wall 7 comprises one or more solid zones 7a, and one or more alveolate zones 7b.

If the alveolar plate 2, or one or more modules 2a, 2b thereof, has a corrugated structure, the alveolate zone 7b is defined by the edges of the partition 5 located at the lateral wall 7.

The method according to the invention advantageously comprises applying to the first major face 6a and the second major face 6b, respectively, by gluing or thermo-welding, a first finishing film 8a and a second finishing film 8b made of polypropylene or a material containing at least 60% by weight (preferably at least 70% by weight, more preferably at least 80% by weight) of polypropylene.

In the advantageous case in which the first major face 6a and the second major face 6b have a surface tension equal to or greater than 38 dyne/cm (preferably equal to or greater than 41 dyne/cm), the first finishing film 8a and the second finishing film 8b can be applied, respectively, to the first major face 6a and the second major face 6b, by means of a polyurethane adhesive 15, since such a type of adhesive requires, in order to be used, such a surface tension value.

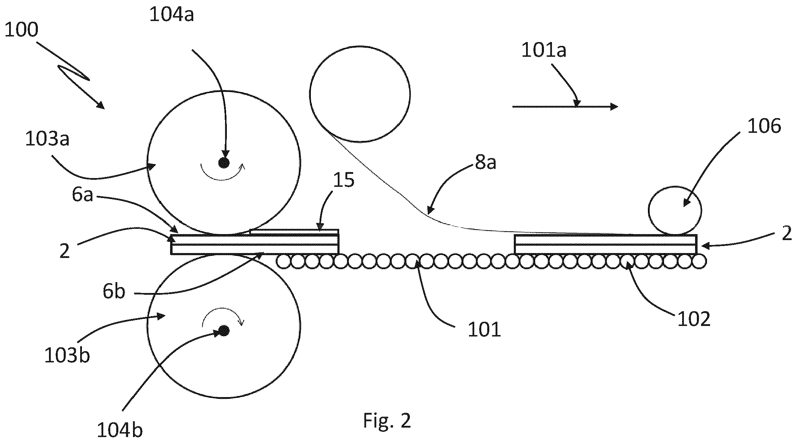

Advantageously, as in the example illustrated in figure 2, the application of the polyurethane adhesive 15 to the first major face 6a and/or second major face 6b, can be carried out, for example, using a machine, for example the same "collar" machine 100 illustrated in figure 1, by passing the alveolar plate 2 (for example moving it by means of the first conveying means 101) between the coating cylinders 103a and 103b, so that the same coat the polyurethane adhesive 15 on the first major face 6a and/or on the second major face 6b.

If, as in the advantageous example of figure 2, the polyurethane adhesive 15 is coated only on the first major face 6a, this step can be repeated by rotating the alveolar plate 2 180 degrees about an axis parallel to the axes of rotation 104a, 104b, and then passing the alveolar plate 2 again between the coating cylinders 103a and 103b.

Preferably, after applying the first finishing film 8a and the second finishing film 8b, the method according to the invention comprises a step of pressing, for example by means of a calender, said first finishing film 8a and second finishing film 8b towards the alveolar plate 2.

Such pressing may for example be carried out using a machine, for example a "collar" machine 100, by passing the alveolar plate 2 (for example moving it by means of the first conveying means 101) under a pressing cylinder 106.

Advantageously, before or after the application to the alveolar plate 2 of the first and/or second finishing films 8a, 8b, the latter can be treated in order to achieve a desired aesthetic effect, for example by painting, lacquering, or digital printing.

Advantageously, the method further comprises applying to the lateral wall 7, by gluing or thermo-welding, a foil 9 made of polypropylene or a material containing at least 60% by weight (preferably at least 70% by weight, more preferably at least 80% by weight) of polypropylene. Preferably, the foil 9 is fixed to the lateral wall 7 by means of a layer of polyolefin adhesive 10 applied in a liquid state, and previously heated to a melting temperature t_{f} between 180°C and 200°C, for example in a melting tank, not shown.

Preferably, the melting temperature t_{f} is 190°C. Advantageously, the polyolefin adhesive is composed of polyolefin base copolymers, has a viscosity at 190°C in the range of 30000-35000 mPa-s (milliPascals per second).

Advantageously, the layer of polyolefin adhesive 10 in the liquid state is applied by means of a coating roller 11 heated to a coating temperature tₛ between 180°C and 200°C, preferably equal to 190°C.

The use of such a polyolefin adhesive, applied in a liquid state and at a high temperature (in fact, the heating of the coating roller 11 keeps the temperature of the polyolefin adhesive around 190°C during the coating) allows to obtain the gluing of the foil 9 to the lateral wall 7 independently of the surface tension of the latter.

This is particularly advantageous, since it would be very difficult, if not impossible, to industrially obtain a desired surface tension for the lateral wall 7, since alveolar plates 2 are commonly sold as rectangular-plan plates of such large standard dimensions (with a lateral extension around one or more metres) that it is not possible to subject them to a "corona treatment", and furthermore because, prior to use, such plates are generally cut to the desired shape and size, so that the lateral wall 7 of the alveolar plate 2 to which the foil 9 is to be applied generally does not coincide with the lateral wall of the plate prior to being cut. Advantageously, in the case where the lateral wall 7 has one or more alveolate zones 7b, the polyolefin adhesive can penetrate the alveoli 3 present in the external surface of said alveolate zones 7b, so as to increase the grip of the polyolefin adhesive on the lateral wall 7 when the same solidifies.

Advantageously, the coating roller 11 is configured to rotate about a first axis of rotation 12, and the alveolar plate 2 is positioned, during the application to the lateral wall 7 thereof of the polyolefin adhesive layer 10, with the first major face 6a and the second major face 6b arranged perpendicularly to the first axis of rotation 12, and is moved so that the lateral wall 7 thereof moves in a direction tangent to the lateral surface 11a of the coating roller 11 with a feed rate vₐ between 10-18 metres per minute, preferably 13.6 metres per minute.

Preferably, after the application of the foil 9, the same is pressed towards the alveolar plate 2, and in particular towards the lateral wall 7 thereof, preferably by means of one or more pressing rollers 13 rotating about a second axis of rotation 14 perpendicular to the first major face 6a and to the second major face 6b.

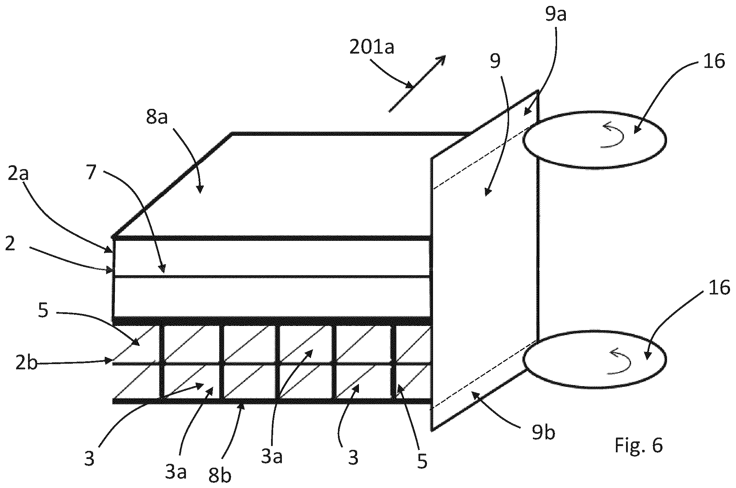

Advantageously, the method according to the invention can comprise, subsequent to the step of pressing the foil 9 towards the lateral wall 7, a step of finishing the panel 1 which comprises removing any portions 9a, 9b of the foil 9 which protrude (for example in figure 6 they protrude above and below) with respect to the lateral wall 7.

Such a finishing step can be carried out, for example, by means of blades 17 and/or cutters 16.

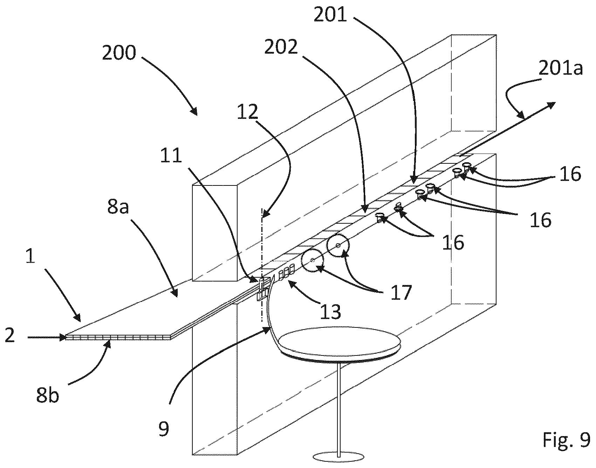

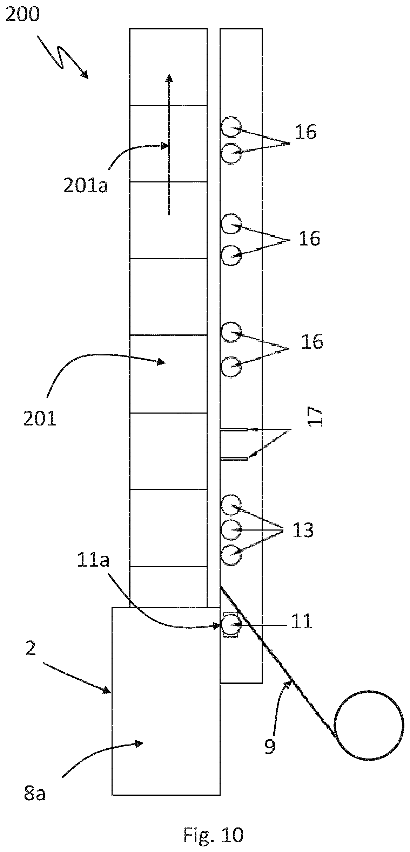

Advantageously, the step of applying the foil 9 to the lateral wall 7 by gluing can be carried out using an edgebanding machine 200, illustrated schematically in figures 9 and 10, comprising, for example, second movement means 201 of the panel 1, such as second conveyor rollers 202, or a conveyor belt, not illustrated, advantageously configured to allow feeding a panel 1 in a second feed direction, indicated with the number 201a.

The edgebanding machine 200 advantageously comprises one or more coating rollers 11, arranged with the first axis of rotation 12 thereof perpendicularly to the second feed direction 201a.

Preferably, the step of pressing the foil 9 towards the lateral wall 7 can also be carried out in the edgebanding machine 200, in which case the same can advantageously comprise, downstream (with reference to the feed direction in the second feed direction 201a) of the one or more coating rollers 11, one or more pressing rollers 13, rotating about second axes of rotation 14 parallel to the first axes of rotation 13.

Preferably, the finishing step can also be carried out in the edgebanding machine 200, in which case the same can advantageously comprise, downstream (with reference to the feed direction in the second feed direction 201a) of the one or more pressing rollers 106, one or more blades 17 and/or one or more cutters 16, configured to remove any portions 9a, 9b of the foil 9 which protrude, for example above and/or below and/or in front and/or behind, with respect to the lateral wall 7.

In the example of figures 9 and 10, the edgebanding machine 200 is advantageously arranged to apply the foil 9 only to one side (the right side with reference to the example of figures 9 and 10) of the lateral wall 7 of the alveolar plate 7; in this case, a similar foil 9 can be applied to another side (front, back, or left side, with reference to the example of figures 9 and 10) of the lateral wall 7, simply by repeating the passage of the foil 1 in the edgebanding machine 200 after rotating said panel by, for example, 90 or 180 or 270 degrees with respect to an axis parallel to the first axis of rotation 12 of the coating rollers 11.

Once the panel 1 has been produced, the same can be used for the production of a piece of furniture or a furnishing component, which is not depicted.

For example, a panel 1 according to the invention can be advantageously used to make a door of a cabinet; in this case, for example, one or more cavities and/or holes for fixing mechanical elements, such as screws, bolts, hinges, guides, etc., necessary for the connection thereof to the cabinet, can be obtained on the panel itself. Preferably, said mechanical components are made of polypropylene, or of material containing at least 60% by weight (preferably at least 70% by weight, more preferably at least 80% by weight) of polypropylene, so as to be recyclable together with the panel 1, without needing to be removed therefrom.

From the description provided, the features and advantages of the invention are clear.

In particular, by virtue of the method according to the invention, it is possible to make a panel for furniture or furnishing accessories which, being made entirely, or for the greater part thereof, of polypropylene, can be completely recycled easily and quickly, and without the need to separate the various parts of the panel in advance.

Furthermore, being completely made of polypropylene or of material containing at least 60% by weight (preferably at least 70% by weight, more preferably at least 80% by weight) of polypropylene, the panel according to the invention is excellently resistant to the presence of liquids and moisture, and can therefore be used without problems in places such as bathrooms, swimming pools, saunas, etc.

Furthermore, the use of an alveolar plate allows to obtain a panel with a very low specific weight, which makes it easier to transport, and also allows it to be used with greater design freedom in the production of furniture and furnishing accessories.

Finally, it is clear that the method and the panel object of the present invention thus conceived are susceptible to numerous modifications and variations, all of which are within the scope of the invention; moreover, all details can be replaced by technically equivalent elements. In practice, the materials used, as well as the dimensions thereof, can be of any type according to the technical requirements.

## Claims

1. Production method of a panel (1) for furniture and furnishing accessories **characterized by** comprising the following steps:
- preparing an alveolar plate (2) made of polypropylene or of a material containing at least 60% by weight of polypropylene, including a first major face (6a) and a second major face (6b), that are solids, substantially parallel to each other and joined up by a lateral wall (7);
- applying, respectively on said first major face (6a) and on said second major face (6b), by gluing or thermo-welding, respectively a first finishing film (8a) and a second finishing film (8b), made of polypropylene or of a material containing at least 60% by weight of polypropylene;
- applying on said lateral wall (7), by gluing or thermo-welding, a foil (9) made of polypropylene or of a material containing at least 60% by weight of polypropylene.

2. Method, as in claim 1, **characterized in that** said foil (9) is fixed to said lateral wall (7) by a layer of polyolefin adhesive (10) applied in the liquid state, and previously heated to a melting temperature (t_{f}) comprised between 180°C and 200°C.

3. Method, as in claim 2, **characterized in that** said polyolefin adhesive (10) is applied at a temperature of the same comprised between 180°C and 200°C.

4. Method, as in claim 2 or 3, **characterised in that** said layer of polyolefin adhesive (10) in the liquid state is applied by means of a coating roller (11) heated to a coating temperature (tₛ) comprised between 180°C and 200°C.

5. Method, as in claim 4, **characterised in that** said coating roller (11) is configured to rotate around a first axis of rotation (12), and said alveolar plate (2) is located, during the application to said lateral wall (7) of the same of said layer of polyolefin adhesive (10), with said first major face (6a) and said second major face (6b) arranged perpendicularly to said first axis of rotation (12), and is moved in such a way that said lateral wall (7) of the same moves in a direction tangent to the lateral wall (11a) of said coating roller (11).

6. Method, as in one or more of previous claims, **characterised in that** said alveolar plate (2) has a plurality of alveoli (3) whose overall volume is equal to at least the 40% of the volume bounded by an envelope surface (4) of said alveolar plate (2).

7. Method, as in one or more of previous claims, **characterised by** comprising, after said step of applying, respectively on said first major face (6a) and on said second major face (6b), by gluing or thermo-welding, respectively a first finishing film (8a) and a second finishing film (8b), made of polypropylene or of a material containing at least 60% by weight of polypropylene, a step of pressing said first finishing film (8a) and second finishing film (8b) toward said alveolar plate (2).

8. Method, as in one or more of previous claims, **characterised by** comprising, after said step of applying on said lateral wall (7), by gluing or thermo-welding, a foil (9) made of polypropylene or of a material containing at least 60% by weight of polypropylene, a step of pressing said foil (9) towards said lateral wall (7).

9. Method, as in claim 8, **characterised in that** said step of pressing said foil (9) towards said lateral wall (7) is obtained by means of one or more pressing rollers (13) rotating around a second axis of rotation (14) that is perpendicular to said first major face (6a) and second major face (6b).

10. Method, as in one or more of previous claims, **characterised in that** said alveolar plate (2) is made of polypropylene filled with a mineral filler.

11. Method, as in one or more of previous claims, **characterized by** comprising successively to said step of applying on said lateral wall (7), by gluing or thermo-welding, a foil (9) made of polypropylene or of a material containing at least 60% by weight of polypropylene, a step of finishing said panel (1) that comprises the removal of possible portions (9a, 9b) of said foil (9) protruding from said lateral wall (7).

12. Panel (1) for furniture and furnishing accessories **characterised by** comprising:
- an alveolar plate (2) made of polypropylene or of a material containing at least 60% by weight of polypropylene, comprising a first major face (6a) and a second major face (6b), that are solid, parallel to each other and joined up by a lateral wall (7);
- a first finishing film (8a) and a second finishing film (8b), made of polypropylene or of a material containing at least 60% by weight of polypropylene, applied respectively to said first major face (6a) and to said second major face (6b) by gluing or thermo-welding;
- a foil (9) made of polypropylene or of a material containing at least 60% by weight of polypropylene, fixed to said lateral wall (7) by thermo-welding or gluing.

## Patentansprüche

1. Herstellungsverfahren einer Platte (1) für Möbel und Einrichtungszubehör, **dadurch gekennzeichnet, dass** es die folgenden Schritte umfasst:
- Herstellung einer Alveolarplatte (2) aus Polypropylen oder einem Material, das mindestens 60 Gew.-% Polypropylen enthält, mit einer ersten Hauptfläche (6a) und einer zweiten Hauptfläche (6b), die massiv und im Wesentlichen parallel zueinander sind und durch eine Seitenwand (7) verbunden sind;
- Aufbringen einer ersten Endbearbeitungsfolie (8a) und einer zweiten Endbearbeitungsfolie (8b) aus Polypropylen oder aus einem Material, das mindestens 60 Gew.-% Polypropylen enthält, auf die erste Hauptfläche (6a) bzw. auf die zweite Hauptfläche (6b) durch Kleben oder Thermoschweißen;
- Aufbringen einer Folie (9) aus Polypropylen oder aus einem Material, das mindestens 60 Gew.-% Polypropylen enthält, auf die Seitenwand (7) durch Kleben oder Thermoschweißen.

2. Verfahren nach Anspruch 1, **dadurch gekennzeichnet, daß** die Folie (9) an der Seitenwand (7) durch eine Schicht aus Polyolefin-Klebstoff (10) befestigt wird, der im flüssigen Zustand aufgetragen und zuvor auf eine Schmelztemperatur (t_{f}) zwischen 180°C und 200°C erhitzt wurde.

3. Verfahren nach Anspruch 2, **dadurch gekennzeichnet, dass** der Polyolefin-Klebstoff (10) bei einer Temperatur zwischen 180°C und 200°C aufgetragen wird.

4. Verfahren nach Anspruch 2 oder 3, **dadurch gekennzeichnet, daß** die Schicht aus Polyolefin-Klebstoff (10) im flüssigen Zustand mittels einer Beschichtungswalze (11) aufgetragen wird, die auf eine Beschichtungstemperatur (tₛ) zwischen 180°C und 200°C erhitzt ist.

5. Verfahren nach Anspruch 4, **dadurch gekennzeichnet, dass** die Beschichtungswalze (11) so konfiguriert ist, dass sie sich um eine erste Drehachse (12) dreht, und dass die Alveolarplatte (2) während des Auftragens der Polyolefin-Klebstoffschicht (10) auf die Seitenwand (7) desselben mit der ersten Hauptfläche (6a) und der zweiten Hauptfläche (6b), die senkrecht zu der ersten Drehachse (12) angeordnet sind, angeordnet ist und so bewegt wird, dass sich die Seitenwand (7) derselben in einer Richtung tangential zu der Seitenwand (11a) der Beschichtungswalze (11) bewegt.

6. Verfahren nach einem oder mehreren der vorhergehenden Ansprüche, **dadurch gekennzeichnet, dass** die Alveolarplatte (2) eine Vielzahl von Alveolen (3) aufweist, deren Gesamtvolumen mindestens 40% des von einer Hüllfläche (4) der Alveolarplatte (2) begrenzten Volumens entspricht.

7. Verfahren nach einem oder mehreren der vorhergehenden Ansprüche, **dadurch gekennzeichnet, dass** es nach dem Schritt des Aufbringens einer ersten Endbearbeitungsfolie (8a) bzw. einer zweiten Endbearbeitungsfolie (8b) aus Polypropylen oder einem Material, das mindestens 60 Gew.-% Polypropylen enthält, auf die erste Hauptfläche (6a) bzw. auf die zweite Hauptfläche (6b) durch Kleben oder Thermoschweißen einen Schritt des Pressens der ersten Endbearbeitungsfolie (8a) und der zweiten Endbearbeitungsfolie (8b) gegen die Alveolarplatte (2) umfasst.

8. Verfahren, wie in einem oder mehreren der vorhergehenden Ansprüche, **dadurch gekennzeichnet, dass** es nach dem Schritt des Aufbringens einer Folie (9) aus Polypropylen oder einem Material, das mindestens 60 Gew.-% Polypropylen enthält, auf die Seitenwand (7) durch Kleben oder Thermoschweißen einen Schritt des Pressens der Folie (9) gegen die Seitenwand (7) umfasst.

9. Verfahren nach Anspruch 8, **dadurch gekennzeichnet, dass** der Schritt des Pressens der Folie (9) in Richtung der Seitenwand (7) mittels einer oder mehrerer Presswalzen (13) erfolgt, die sich um eine zweite Drehachse (14) drehen, die senkrecht zu der ersten Hauptfläche (6a) und der zweiten Hauptfläche (6b) verläuft.

10. Verfahren nach einem oder mehreren der vorhergehenden Ansprüche, **dadurch gekennzeichnet, dass** die Alveolarplatte (2) aus Polypropylen hergestellt ist, das mit einem mineralischen Füllstoff gefüllt ist.

11. Verfahren nach einem oder mehreren der vorhergehenden Ansprüche, **dadurch gekennzeichnet, dass** es nach dem Schritt des Aufbringens einer Folie (9) aus Polypropylen oder einem Material, das mindestens 60 Gew.-% Polypropylen enthält, auf die Seitenwand (7) durch Kleben oder Thermoschweißen einen Schritt der Endbearbeitung der Platte (1) umfasst, der das Entfernen möglicher Abschnitte (9a, 9b) der Folie (9), die von der Seitenwand (7) vorstehen, umfasst.

12. Platte (1) für Möbel und Einrichtungszubehör, **dadurch gekennzeichnet, dass** sie umfasst:
- eine Alveolarplatte (2) aus Polypropylen oder aus einem Material, das mindestens 60 Gew.-% Polypropylen enthält, mit einer ersten Hauptfläche (6a) und einer zweiten Hauptfläche (6b), die massiv und parallel zueinander sind und durch eine Seitenwand (7) verbunden sind;
- eine erste Endbearbeitungsfolie (8a) und eine zweite Endbearbeitungsfolie (8b) aus Polypropylen oder aus einem Material, das mindestens 60 Gew.-% Polypropylen enthält, die auf die erste Hauptfläche (6a) bzw. auf die zweite Hauptfläche (6b) durch Kleben oder Thermoschweißen aufgebracht werden;
- eine Folie (9) aus Polypropylen oder aus einem Material, das mindestens 60 Gew.-% Polypropylen enthält, die an der Seitenwand (7) durch Thermoschweißen oder Kleben befestigt ist.

## Revendications

1. Procédé de fabrication d'un panneau (1) pour meubles et accessoires d'ameublement **caractérisé par** les étapes suivantes:
- préparer une plaque alvéolaire (2) en polypropylène ou en un matériau contenant au moins 60% en poids de polypropylène, comprenant une première face principale (6a) et une deuxième face principale (6b), solides, sensiblement parallèles l'une à l'autre et reliées par une paroi latérale (7);
- appliquer, respectivement sur ladite première face principale (6a) et sur ladite deuxième face principale (6b), par collage ou thermo-soudage, respectivement un premier film de finition (8a) et un deuxième film de finition (8b), en polypropylène ou en un matériau contenant au moins 60% en poids de polypropylène;
- appliquer sur ladite paroi latérale (7), par collage ou thermo-soudage, une feuille (9) en polypropylène ou en un matériau contenant au moins 60% en poids de polypropylène.

2. Procédé selon la revendication 1, **caractérisé par le fait que** ladite feuille (9) est fixée à ladite paroi latérale (7) par une couche de colle polyoléfine (10) appliquée à l'état liquide, et préalablement chauffée à une température de fusion (t_{f}) comprise entre 180°C et 200°C.

3. Procédé selon la revendication 2, **caractérisé par le fait que** l'adhésif polyoléfine (10) est appliqué à une température comprise entre 180°C et 200°C.

4. Procédé selon la revendication 2 ou 3, **caractérisé par le fait que** ladite couche d'adhésif polyoléfine (10) à l'état liquide est appliquée au moyen d'un rouleau d'enduction (11) chauffé à une température d'enduction (tₛ) comprise entre 180°C et 200°C.

5. Procédé selon la revendication 4, **caractérisé en ce que** ledit rouleau d'enduction (11) est configuré pour tourner autour d'un premier axe de rotation (12), et ladite plaque alvéolaire (2) est située, lors de l'application sur ladite paroi latérale (7) de celle-ci de ladite couche d'adhésif polyoléfine (10), avec ladite première face principale (6a) et ladite deuxième face principale (6b) disposées perpendiculairement audit premier axe de rotation (12), et est déplacée de telle sorte que ladite paroi latérale (7) de celle-ci se déplace dans une direction tangente à la paroi latérale (11a) dudit rouleau d'enduction (11).

6. Procédé, tel que dans une ou plusieurs des revendications précédentes, **caractérisé en ce que** ladite plaque alvéolaire (2) présente une pluralité d'alvéoles (3) dont le volume global est égal à au moins 40% du volume délimité par une surface enveloppe (4) de ladite plaque alvéolaire (2).

7. Procédé, tel que dans une ou plusieurs des revendications précédentes, **caractérisé en ce qu'**il comprend, après ladite étape d'application, respectivement sur ladite première face principale (6a) et sur ladite deuxième face principale (6b), par collage ou thermosoudage, respectivement d'un premier film de finition (8a) et d'un deuxième film de finition (8b), en polypropylène ou en un matériau contenant au moins 60% en poids de polypropylène, une étape de pressage dudit premier film de finition (8a) et du deuxième film de finition (8b) en direction de ladite plaque alvéolaire (2).

8. Procédé, tel que dans une ou plusieurs des revendications précédentes, **caractérisé en ce qu'**il comprend, après ladite étape d'application sur ladite paroi latérale (7), par collage ou thermo-soudage, d'une feuille (9) en polypropylène ou en un matériau contenant au moins 60% en poids de polypropylène, une étape de pressage de ladite feuille (9) en direction de ladite paroi latérale (7).

9. Procédé selon la revendication 8, **caractérisé par le fait que** l'étape de pressage de la feuille (9) vers la paroi latérale (7) est obtenue au moyen d'un ou plusieurs rouleaux de pressage (13) tournant autour d'un deuxième axe de rotation (14) perpendiculaire à la première face principale (6a) et à la deuxième face principale (6b).

10. Procédé tel que décrit dans une ou plusieurs des revendications précédentes, **caractérisé par le fait que** ladite plaque alvéolaire (2) est réalisée en polypropylène chargé d'une charge minérale.

11. Procédé, tel que dans une ou plusieurs des revendications précédentes, **caractérisé en ce qu'**il comprend successivement à ladite étape d'application sur ladite paroi latérale (7), par collage ou thermo-soudage, d'une feuille (9) en polypropylène ou en un matériau contenant au moins 60% en poids de polypropylène, une étape de finition dudit panneau (1) qui comprend l'élimination d'éventuelles portions (9a, 9b) de ladite feuille (9) faisant saillie de ladite paroi latérale (7).

12. Panneau (1) pour meubles et accessoires d'ameublement **caractérisé par le fait qu'**il comprend:
- une plaque alvéolaire (2) en polypropylène ou en un matériau contenant au moins 60% en poids de polypropylène, comprenant une première face principale (6a) et une deuxième face principale (6b), solides, parallèles l'une à l'autre et reliées par une paroi latérale (7);
- un premier film de finition (8a) et un second film de finition (8b), en polypropylène ou en un matériau contenant au moins 60% en poids de polypropylène, appliqués respectivement sur ladite première face principale (6a) et sur ladite seconde face principale (6b) par collage ou thermo-soudage;
- une feuille (9) en polypropylène ou en un matériau contenant au moins 60% en poids de polypropylène, fixée à ladite paroi latérale (7) par thermo-soudage ou collage.
